# EUROPEAN PATENT SPECIFICATION

(11) **EP 1 414 217 B1**
(45) Date of publication and mention of the grant of the patent: **11.01.2006**
(21) Application number: 03256693.7
(22) Date of filing: 23.10.2003
(51) Int. Cl.: H04L 29/12

(54) **System and method for DHCP client-ID generation**
System und Verfahren zur Erzeugung einer Kennung für einen DHCP Client
Systéme et méthode de génération d'id-client DHCP

(30) Priority: 24.10.2002 US 420925 P
(43) Date of publication of application: 28.04.2004
(73) Proprietor: SUN MICROSYSTEMS, INC., Santa Clara, California 95054 (US)
(72) Inventor: Krishnamurthy, Viswanath, Sunnyvale, California 94086 (US); Hyder, Mir J., Sunnyvale, California 94089 (US); Jain, Sunnit, Fremont, California 94555 (US)
(74) Representative: Harris, Ian Richard

(56) References cited:
- GB-A- 2 342 471
- US-A- 6 154 728
- US-A1- 2002 087 868
- US-B1- 6 363 423

## Description

### BACKGROUND OF THE INVENTION

### 1. FIELD OF THE INVENTION

The present invention relates to the field of computer systems and, in particular, to configuring computer systems.

### 2. BACKGROUND

Dynamic Host Configuration Protocol (DHCP) is a protocol for assigning dynamic Internet Protocol (IP) addresses to devices on a computer network. Dynamic addressing allows a device to have a different IP address every time the device connects to the network. In some computer systems, the device's IP address can change even while the device is still connected to the network. DHCP also supports a mix of static and dynamic IP addresses. Generally, dynamic addressing simplifies network administration because the software keeps track of IP addresses rather than requiring an administrator to manage the task. As a result, a new computer or workstation can be added to a network without the requirement of manually assigning the computer a unique IP address. For example, many ISPs use dynamic IP addressing for dial-up users. DHCP client support is built into a wide variety of software, including Windows 95 ™ and Windows NT ™. For instance, an Windows NT 4 Server ™ includes both client and server support.

Typically, in a computer system with DHCP boot support, a client-ID is tied to a network device such as a field replaceable unit (FRU). For example, the FRU may be a CPU card or similar board. Generally, the client-ID Is an Ethernet address corresponding to the Ethernet port on the FRU, e.g., CPU board. The client-ID is stored on the FRU. Accordingly, when the FRU is removed from the computer system, the client-ID information is not retained, e.g., it is no longer available to the system.

In the event of an FRU failure, e.g., a CPU node board fails, the FRU needs to be replaced. For example, the FRU may experience a memory failure, CPU failure, disk failure or any other similar event. Unfortunately, because the client-ID is tied to the FRU, the cllent-ID configuration is lost when this FRU is removed. As a result, the system needs to be reconfigured with the correct client-ID whenever an FRU or board is removed for repair or replacement and a new FRU is added. In many industries. FRU replacement is quite common because replacing an entire system is impractical. Moreover, many industries also desire ease of maintenance and plug and play capabilities. Therefore, because FRUs are frequently replaced due to upgrades or repair, the reconfiguration process needs to be constantly repeated, which increases down time and uses limited administrator resources, among other disadvantages. Accordingly, there is a need to replace or provide client-ID configuration information in the event of an FRU or board failure that avoids the need to reconfigure the system.

US2002/0087868 discloses a portable storage device, for example a secure smart card, that contains network identification information and configuration information for a processing unit that is connectable to a data communications network. The processing unit includes a device reader for reading the portable storage reader.

GB 2342471 discloses a system and method for the automatic configuration of field replaceable units (FRUs). The FRU contains non-volatile memory that can be used to store information, such as a network address. This information can be accessed for performing automated configuration.

### SUMMARY OF THE INVENTION

Aspects of the invention are defined in the appended claims.

An embodiment of the present invention provides a system and method to allow a device associated with a client-ID to be replaced without requiring the system to reconfigure the cilent-ID configuration information. In an example of an embodiment of the present invention, the client-ID configuration information is associated or tied to a slot or holder for a network device, rather than the network device itself. For example, the client-ID configuration information may be tied to an FRU holder, such as a Compact Peripheral Component Interconnect (CPCI) slot, and not the FRU itself. The client-ID configuration information is managed by a central resource. Accordingly, when the network device is replaced with a new device, the client-ID can be assigned from this central resource. In one exemplary embodiment, the central resource may be a service processor or an alarm card. The service processor may access a storage device to retrieve the client-ID and transmit it to an FRU. Thus, when the FRU is replaced, this dient-ID information is downloaded from the service processor by the new FRU. As a result, the need to reconfigure the client-ID information in the event a network device is replaced can be avoided.

In one embodiment, a computer network system includes a circuit board that forms a backplane. A field replaceable unit (FRU) slot is located on the backplane. The computer network system also includes a bus. A central resource is coupled with the FRU slot via the bus. A non-volatile memory is coupled to the central resource. The central resource generates a client-ID that is associated with the FRU slot.

In another embodiment, a method for client-ID generation on a computer network system is provided. The method includes generating a client-ID via a central resource. The generated client-ID is associated with an FRU slot. The associated client-ID is then stored in a non-volatile memory. The stored client-ID can then be provided from the stored client-ID to an FRU via an interface. Once provided to the FRU, the FRU can then utilize the client-ID.

A more complete understanding of the system and method for Dynamic Host Configuration Protocol (DHCP) client-ID generation will be afforded to those skilled in the art, as well as a realization of additional advantages and objects thereof, by a consideration of the following detailed description of examples of embodiments. Reference will be made to the appended sheets of drawings which will first be described briefly.

### BRIEF DESCRIPTION OF THE DRAWINGS

The drawings illustrate the design and utility of examples of embodiments of the invention. The components in the drawings are not necessarily to scale, emphasis instead being placed upon illustrating the principles underlying the embodiment. Moreover, in the drawings like reference numerals designate corresponding parts throughout the different views.
Fig. 1 is an exploded perspective view of a Compact Peripheral Component Interconnect (CPCI) chassis system according to an example of an embodiment;
Fig. 2 shows the form factors that are defined for the CPCI node card;
Fig. 3 is a front view of a backplane having eight slots with five connectors each;
Fig. 4(a) shows a front view of another CPCI backplane;
Fig. 4(b) shows a back view of the backplane of Fig. 4(a);
Fig. 5 shows a side view of the backplane of Figs. 4(a) and 4(b);
Fig. 6 shows a block diagram that illustrates a CPCI system that includes a host card and a host CPU according to an example of an embodiment;
Fig. 7 shows a block diagram of an example of an embodiment of a computer system; and
Fig. 8 shows a flow diagram of an example of an embodiment of generating and delivering client-ID information.

### DETAILED DESCRIPTION

The present invention provides a system and method for providing Dynamic Host Configuration Protocol (DHCP) client-ID information when a new network device is installed or attached to replace a prior network device in a manner that does not require reconfiguration of the client-ID information. In the following detailed description, like element numerals are used to describe like elements illustrated in one or more drawings.

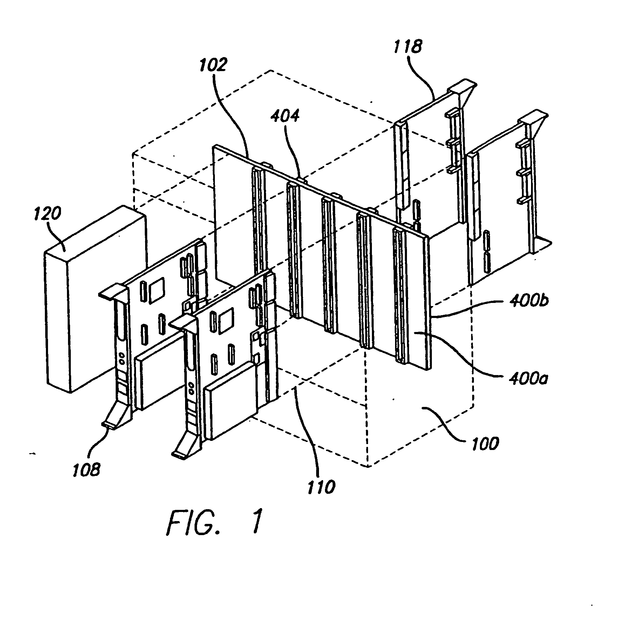

Referring to Fig. 1, there is shown an exploded perspective view of a Compact Peripheral Component Interconnect (CPCI) chassis system as envisioned in an exemplary embodiment. The chassis system 100 includes a CPCI circuit board referred to in the conventional CPCI system as a passive backplane (or centerplane) 102 since the circuit board is located at the back of the chassis 100 and front cards (e.g., motherboards) are inserted from the front of the chassis 100. The front side 400a of the backplane 102 has slots provided with connectors 404. A corresponding transition card 118 is coupled to the front card 108 via backplane 102. The backplane 102 contains corresponding slots and connectors (not shown) on its backside 400b to mate with transition card 118. In the chassis system 100 that is shown, a front card 108 may be inserted into appropriate slots and mated with the connectors 404. For proper insertion of the front card 108 into the slot, card guides 110 are provided. This CPCI chassis system 100 provides front removable front cards (e.g., motherboards) and unobstructed cooling across the entire set of front cards. The backplane 102 is also connected to a power supply 120 that supplies power to the CPCI system.

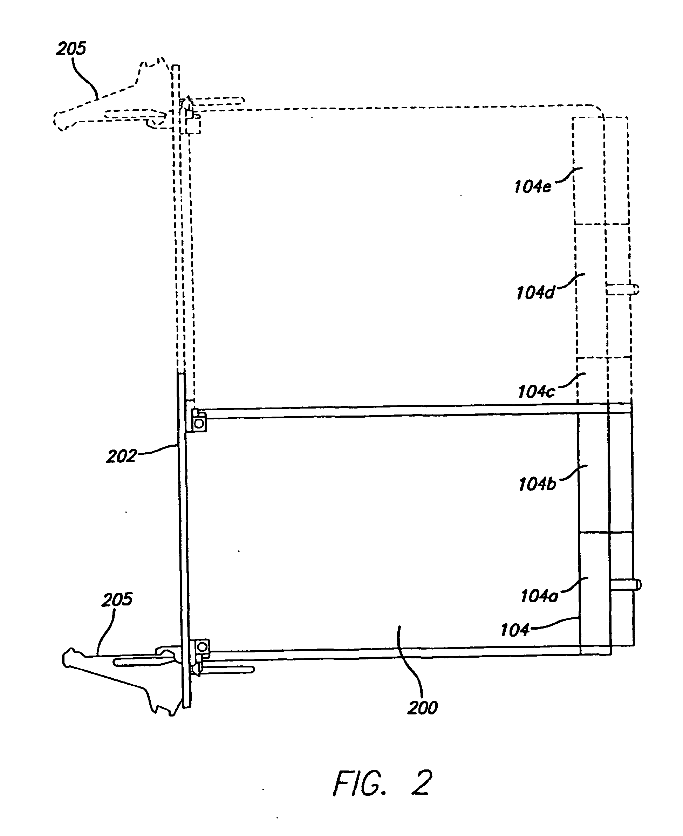

Referring to Fig. 2, there are shown the form factors defined for the CPCI front card (e.g., motherboard), which is based on the PICMG CPCI industry standard (e.g., the standard in the PICMG 2.0 CPCI specification). As shown in Fig. 2, the front card 200 has a front plate interface 202 and ejector/injector handles 205. The front plate interface 202 is consistent with PICMG CPCI packaging and is compliant with IEEE 1101.1 or IEEE 1101.10. The ejector/injector handles should also be compliant with IEEE 1101.1. Two ejector/injector handles 205 are used for the 6U front cards in the present embodiment. The connectors 104a-104e of the front card 200 are numbered starting from the bottom connector 104a, and the 6U front card size is defined, as described below.

The dimensions of the 3U form factor are approximately 160.00 mm by approximately 100.00 mm, and the dimensions of the 6U form factor are approximately 160.00 mm by approximately 233.35 mm. The 3U form factor includes two 2 mm connectors 104a-104b and is the minimum as it accommodates the full 64 bit CPCI bus. Specifically, the 104a connectors are reserved to carry the signals required to support the 32-bit PCI bus; hence no other signals may be carried in any of the pins of this connector. Optionally, the 104a connectors may have a reserved key area that can be provided with a connector "key," which may be a pluggable piece (e.g., a pluggable plastic piece) that comes in different shapes and sizes, to restrict the add-on card to mate with an appropriately keyed slot. The 104b connectors are defined to facilitate 64-bit transfers or for rear panel I/O in the 3U form factor. The 104c-104e connectors are available for 6U systems as also shown in Fig. 2. The 6U form factor includes the two connectors 104a-104b of the 3U form factor, and three additional 2 mm connectors 104c-104e. In other words, the 3U form factor includes connectors 104a-104b, and the 6U form factor includes connectors 104a-104e. The three additional connectors 104c-104e of the 6U form factor can be used for secondary buses (i.e., Signal Computing System Architecture (SCSA) or MultiVendor Integration Protocol (MVIP) telephony buses), bridges to other buses (i.e., Virtual Machine Environment (VME) or Small Computer System Interface (SCSI)), or for user specific applications. Note that the CPCI specification defines the locations for all of the connectors 104a-104e. but only the signal-pin assignments for certain connectors are defined (e.g., the CPCI bus portion 104a and 104b are defined). The remaining connectors are the subjects of additional specification efforts or can be user defined for specific applications, as described above.

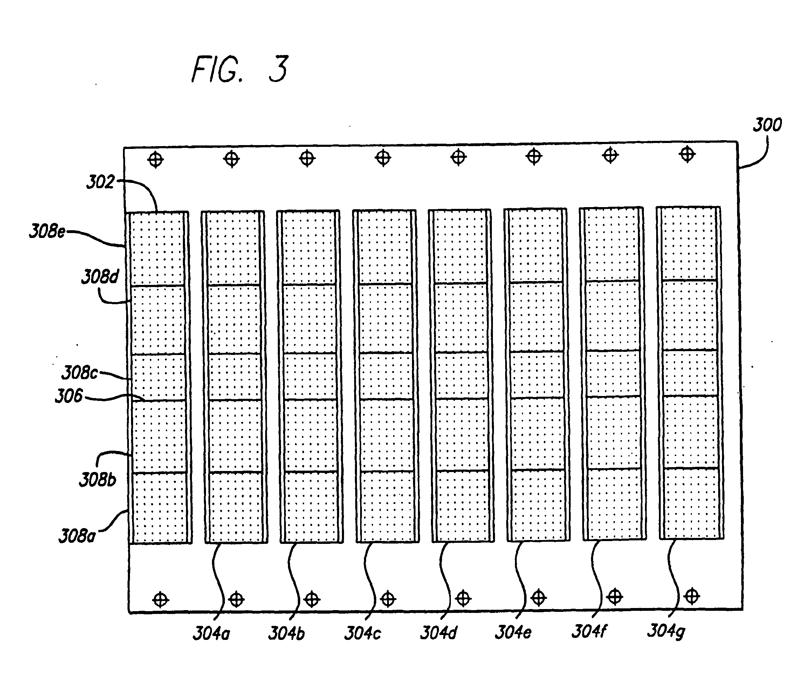

Referring to Fig. 3, there is shown a front view of a 6U backplane having eight slots. A CPCI system includes one or more CPCI bus segments, where each bus segment typically includes up to eight CPCI card slots. Each CPCI bus segment includes at least one system slot 302 and up to seven peripheral slots 304a-304g. The CPCI front card for the system slot 302 provides arbitration, clock distribution, and reset functions for the CPCI peripheral cards on the bus segment. The peripheral slots 304a-304g may contain simple cards, intelligent slaves and/or PCI bus masters.

The connectors 308a-308e have connector-pins 306 that project in a direction perpendicular to the backplane 300, and are designed to mate with the front side "active" cards ("front cards"), and "pass-through" its relevant interconnect signals to mate with the rear side "passive" input/output (I/O) card(s) ("rear transition cards"). In other words, in the conventional CPCI system, the connector-pins 306 allow the interconnected signals to pass-through from the front cards, such as the motherboards, to the rear transition cards.

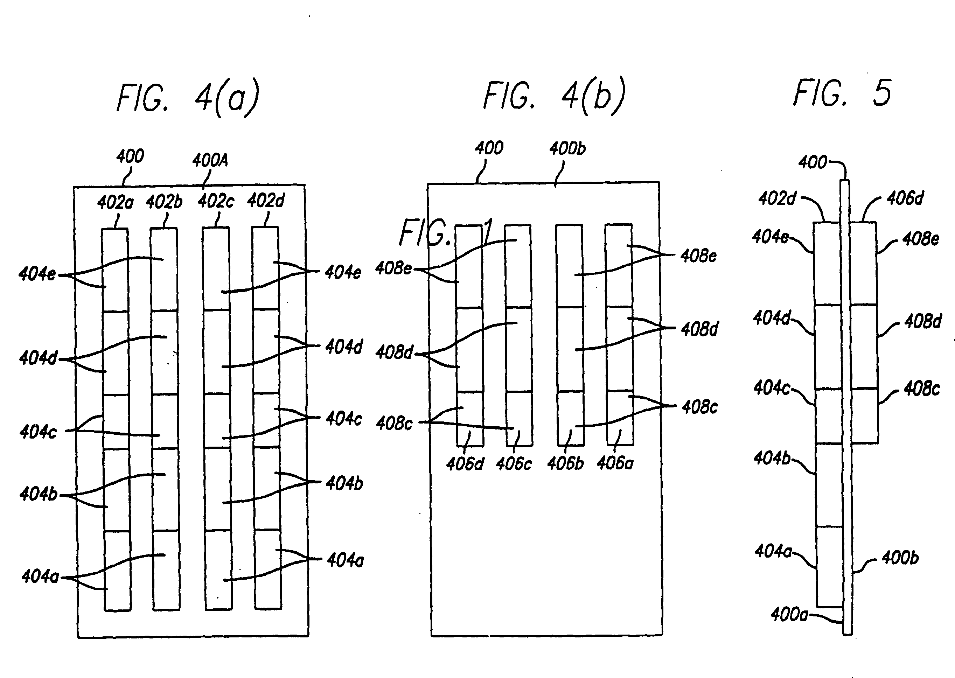

Referring to Figs. 4(a) and 4(b), there are shown respectively a front and back view of a CPCI backplane in another 6U form factor embodiment. In Fig. 4(a), four slots 402a-402d are provided on the front side 400a of the backplane 400. In Fig. 4(b), four slots 406a-406d are provided on the back side 400b of the backplane 400. Note that in both Figs. 4(a) and 4(b) four slots are shown instead of eight slots as in Fig. 3 . Further, it is important to note that each of the slots 402a-402d on the front side 400a has five connectors 404a-404e while each of the slots 406a-406d on the back side 400b has three connectors 408c-408e. This is because the 404a connectors are provided for 32 bit PCI and connector keying and the 404b connectors are typically only for I/O in the 3U form factor. Thus, in the 6U form factor they do not typically have I/O connectors to their rear. Accordingly, the front cards that are inserted in the front side slots 402a-402d only transmit signals to the rear transition cards that are inserted in the back side slots 406a-406d through front side connectors 404c-404e.

Referring to Fig. 5, there is shown a side view of the backplane of Figs. 4(a) and 4(b). As shown in Fig. 5, slot 402d on the front side 400a and slot 406d on the back side 400b are arranged to be substantially aligned so as to be back to back. Further, slot 402c on the front side 400a and slot 406c on the backside 400b are arranged to be substantially aligned, and so on. Accordingly, the front side connectors 404c-404e are arranged back-to-back with the back side connectors 408c-408e. Note that the front side connector 404a-404b does not have a corresponding back side connector. It is important to note that the system slot 402a is adapted to receive the front card having a CPU; the signals from the system slot 402a are then transmitted to corresponding connector-pins of the peripheral slots 402b-402d. Thus, the preferred CPCI system can have expanded I/O functionality by adding peripheral front cards in the peripheral slots 402b-402d.

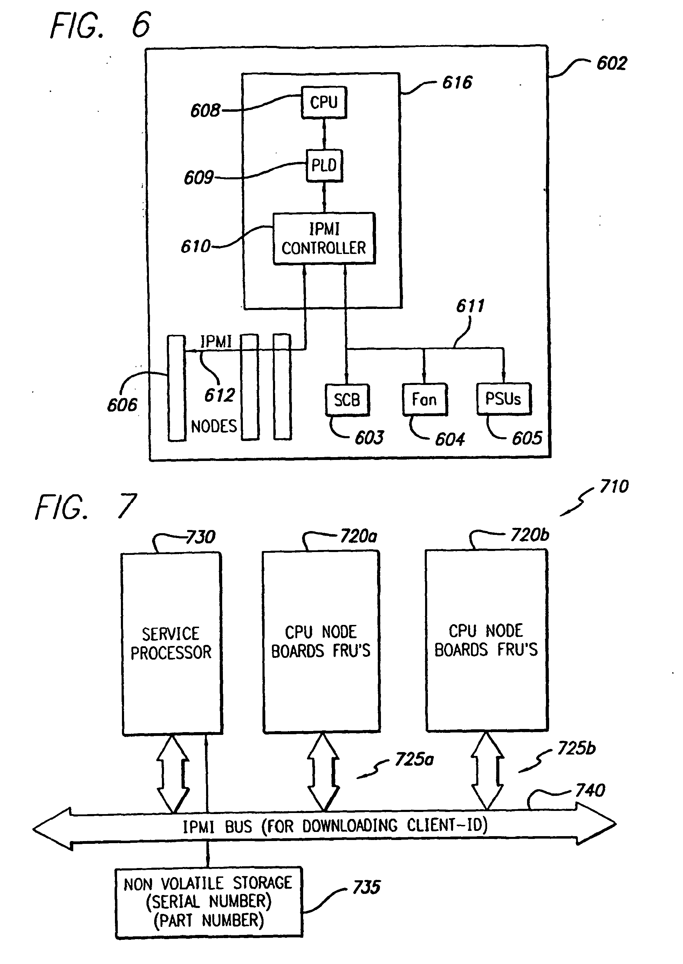

Referring to Fig. 6, there is shown an example of a CPCI system 602 comprising a CPCI backplane or midplane (not shown), a plurality of node cards (or blades) 606, a host node card 616, a switch card (not shown), power supplies 605, fans 604, and a system control board (SCB) 603. The host node card 616 (or CPU card or CPU node board) includes a central processing unit (CPU) 608 to provide the on-board intelligence for the host node card 616. The CPU 608 of the host node card 616 is coupled to memories (not shown) containing firmware and/or software that runs on the host node card 616, Intelligent Platform Management Interface (IPMI) controller 610, and other devices, such as a programmable logic device (PLD) 609 for interfacing an IPMI controller 610 with the CPU 608. The SCB 603 provides the control and status of the system 602, such as monitoring the healthy status of all the power supplies 605 and the fans 604 (FRUs), powering ON and OFF the FRUs, etc. The SCB 603 is interfaced with the host node card 616 via an 12C interface 611. so that the host node card 616 can access and control the FRUs in the system 602. The fans 604 provide the cooling to the entire system 602. Each of the fans 604 has a fan board which provides control and status information about the fans and, like the SCB 603, are also controlled by the host node card 616 through the Inter Integrated Circuit (I2C) interface 611. The power supplies 605 provide the required power for the entire system 602. The node card 616 manages the power supplies 605 through the 12C 611 (e.g., the host node card 616 determines the status of the power supplies 605 and can power the power supplies 605 ON and OFF). The other node cards 606 are independent computing nodes and the host node card 616 manages these other node cards 606 though the IPMI 612 (or IPMB).

In addition, the IPMI controller 610 has its own processing core unit and runs the IPMI protocol over the IPMB 612 to perform the management of the computing node cards 606. IPMI Controller 610 is also the central unit (or point) for the management of the system 602. The CPU 608 of the host node card 616 can control the IPMI controller 610 and retrieve the system 602 status information by interfacing with the IPMI controller 610 via PLD 609. The IPMI controller 610 provides the host node card 616 with the IPMB 612 (the IPMB then connects with the "intelligent FRUs," such as node cards and switch fabric card) and the 12C 611 (the I2C interface 611 then connects with the "other FRUs," such as fans, power supplies, and the SCB).

Fig. 7 provides an example of an embodiment of a networked computer system (e.g., a CPCI computer system), indicated generally at 710, that utilizes Dynamic Host Configuration Protocol (DHCP) boot support. As discussed above, DHCP is an Intemet Engineering Task Force (IETF) standard protocol for assigning IP addresses dynamically. DHCP allows IP addresses, IP masks and other parameters to be assigned to client machines dynamically and for a short period of time. One advantage of this protocol is that it allows for the reuse of resources, such as IP addresses, for example, that are at a premium. For boot support, the computer system 710 can use DHCP protocol to obtain the IP address of the server where the operating system (OS) resides and the corresponding file location. The computer system 10 may then use DHCP protocol to download the OS file from the server.

Computer system 710 contains several FRUs 720. FRU 720 may be any component in the system that can be replaced in the field in the event of a failure. For example, FRU 720 may be a CPU node board, a CPCI card, a host node card, other node cards, or any other similar device. Each FRU 720 (e.g., 720a and 720b) may be considered a DHCP client FRU 720 may be connected to computer system 710 via holder or slot 725. For example, if FRU 720 is a CPCI card, slot 725 may be a CPCI slot.

Generally, each DHCP client has a unique identification, the client-ID. Typically, this client-ID is the Ethernet address of the DHCP client As discussed above, for conventional computer systems, this client-ID is tied to the FRU or CPU board itself and not to the slot. As a result, when the FRU is replaced because of a failure, the client-ID configuration is lost when this FRU is removed. In order to avoid the need to reconfigure the client-ID information, an exemplary embodiment of the present invention assigns or ties the client-ID information to slot 725, rather than FRU 720, as discussed below.

Computer system 710 also includes a central resource 730. In one exemplary embodiment, central resource 730 is a service processor. Generally, central resource or service processor 730 is used to configure and manage computer system 710. Service processor 730 may be an alarm card, for example. Service processor 730 may access storage 735. Storage 735 is preferably any non-volatile memory or storage device. For example, storage 735 may be a non-volatile midplane storage device. The components of computer system 710, including FRU 720 and service processor 730, are connected to bus 740. Bus 740 may be an IPMI protocol bus, for example.

The central resource 730, e.g., service processor or alarm card, may generate or prepare a unique client-ID for each slot 725 (i.e., slot 725a and 725b). The client-ID information may be based on any number of parameters. Suitable parameters include, for example, serial number, part number, the geographical address of slot 725, e.g., slot number, or any other identifying information that can be used to create a unique identifier to prevent FRU from clashing with other network devices. These exemplary parameters form a unique identification, e.g., client-ID, for the DHCP protocol to utilize. For example, the serial number, part number and slot number may be concatenated to form a 14-byte client-ID number.

Once generated, the client-ID information is then stored in storage 735. Other information, such as system information, may also be stored in storage 735 for purposes of enabling a new FRU. Once generated, the dient-ID information may be sent to the FRU 720. Other information stored in storage 735, such as system information, may also be sent to FRU 720. For example, the client-ID may be downloaded to a CPU node board 720 using IPMI protocol. FRU 720 may then receive this information and utilize it as a client-ID field for DHCP booting. Thus, the boot server need not be reconfigured with a new client-ID for the replacement FRU 720. Accordingly, the client-ID configuration information may be tied to slot 725, e.g., an FRU holder or a CPCI slot, rather than the FRU 720 itself, to thereby avoid reconfiguration following FRU 720 replacement.

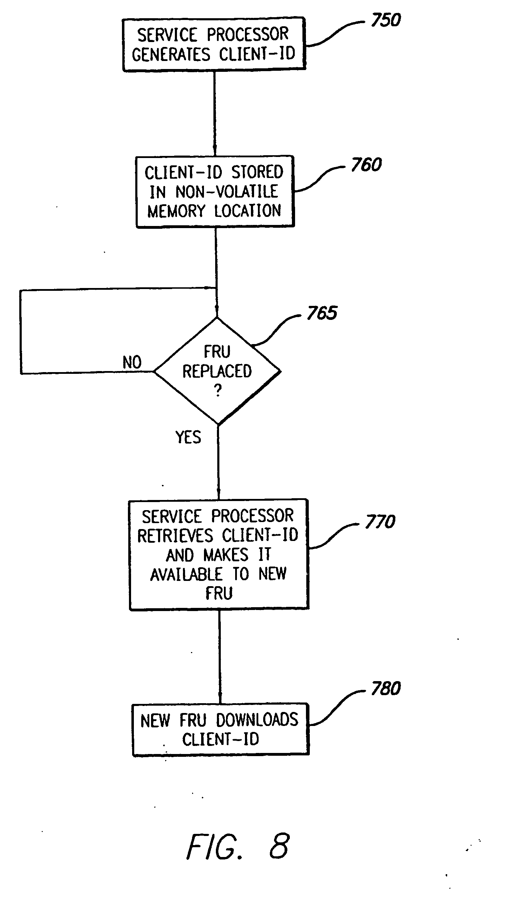

In general and according to the foregoing, Fig. 8 is a flowchart illustrating an example of an embodiment of a method for generating and assigning a client-ID following an FRU replacement. Referring now to Figs 7 and 8, initially, at step 750, the service processor 730 generates a unique client-ID for each FRU slot 725. Next, at step 760, the service processor 730 stores the client-ID information in storage 735. At step 765, it is determined whether an FRU 720 has been removed and replaced with a new FRU 720. For example, FRU 720a may be removed from slot 725a and replaced with a new device. If so, the service processor 730 retrieves the appropriate client-ID and makes the information available to the new FRU 720a. For the previous example, the service processor 730 will retrieve the client-ID information corresponding to slot 725a from storage 735 and make this information available to new FRU 720a. The new FRU 20 subsequently downloads the client-ID, thereby avoiding the need to reconfigure the system with a new client-ID.

Having described particular embodiments of the system and method for providing client-ID information to a network device without requiring reconfiguration, it should be apparent to those skilled in the art that certain advantages of the described system and method have been achieved. It should also be appreciated that various modifications, adaptations and alternative embodiments thereof may be made within the scope of the claimed invention.

## Claims

1. A computer system (710), comprising:
a slot (725) for a field replaceable unit (720);
a central resource (730) coupled with said field replaceable unit slot; and
a non-volatile memory (735) coupled to said central resource;
wherein said central resource is operable to generate a client-ID and to associate said client-ID with said field replaceable unit slot, wherein said client-ID is associated with said slot by tying said client-ID to said field replaceable unit slot rather than to a field replaceable unit to be inserted into said field replaceable unit slot.

2. The computer system of Claim 1, wherein said field replaceable unit slot comprises a Compact Peripheral Component Interconnect; CPCI; slot.

3. The computer system of any one of the preceding claims, wherein said client-ID comprises one of a serial number, part number, and a geographical address of said field replaceable unit stot.

4. The computer system of any one of the preceding claims, wherein said client-ID comprises a unique identifier and wherein said unique identifier prevents a field replaceable unit from clashing with other network devices.

5. The computer system of any one of the preceding claims, wherein said client-ID comprises a client-id utilized by an address protocol for assigning dynamic Intemet Protocol; IP; addresses.

6. The computer system of Claim 5, wherein said address protocol comprises a Dynamic Host Configuration protocol; DHCP.

7. The computer system of any one of the preceding claims, further comprising a field replaceable unit held by said field replaceable unit slot.

8. The computer system of Claim 7, wherein said client-ID is stored in said non-volatile memory.

9. The computer system of Claim 8, wherein said client-ID can be downloaded by said field replaceable unit.

10. The computer system of Claim 9, wherein said field replaceable unit uses an Intelligent Platform Management Interface; IPMI; protocol to download said client-ID from said non-volatile memory.

11. The computer system of Claim 9 or Claim 10, wherein said field replaceable unit uses said dient-ld for Dynamic Host Configuration Protocol; DHCP; booting.

12. The computer system of any one of Claims 8 to 11, wherein said central resource retrieves and makes said client-id available to a new field replaceable unit and wherein said new field replaceable unit downloads said client-ID when said new field replaceable unit is held by said field replaceable unit slot.

13. The computer system of any one of the preceding claims, further comprising a second field replaceable unit slot located on a backplane and wherein said central resource generates a second client-ID.

14. The computer system of Claim 13, wherein said client-ID is uniquely generated by said central resource for said field replaceable unit slot and said second client-ID is uniquely generated by said central resource for said second field replaceable unit slot

15. The computer system of any one of the preceding claims, comprising a circuit board forming a backplane and a bus (740), said field replaceable unit slot being located on said backplane and said central resource being coupled with said field replaceable unit slot via said bus.

16. A method for client-ID generation on a computer system (710), comprising:
generating a client-ID via a central resource (730);
associating said client-ID with a slot (725) for a field replaceable unit (720);
storing said associated client-ID in a non-volatile memory (735);
providing said stored client-ID to a field replaceable unit via an interface; and
utilizing said client-ID by said field replaceable unit;
wherein associating said client-ID with said slot comprises tying said client-ID with said slot rather than with a field replaceable unit to be inserted into said slot.

17. The method of Claim 16, wherein said field replaceable unit is inserted into said field replaceable unit slot associated with said client-ID.

18. The method of Claim 16 or Claim 17, wherein said utilizing said client-ID by said field replaceable unit comprises utilizing said client-ID as a client-ID field for Dynamic Host Configuration Protocol; DHCP; booting.

19. The method of any one of Claims 16 to 18, further comprising:
determining whether said field replaceable unit is to be replaced by a new field replaceable unit;
retrieving and making said client-ID available to said new field replaceable unit; and
downloading said dient-id by said new field replaceable unit.

## Patentansprüche

1. Computersystem (710), welches aufweist:
einen Steckplatz (Slot) (725) für eine austauschbare Feldeinheit (720),
eine zentrale Resource (730), die mit dem Steckplatz für die austauschbare Feldeinheit verbunden ist, und
einen nicht flüchtigen Speicher (735), der mit der zentralen Resource verbunden ist,
wobei die zentrale Resource derart betreibbar ist, daß sie eine Client-ID erzeugt und die Client-ID dem Steckplatz für die austauschbare Feldeinheit zuordnet, wobei die Client-ID dem Steckplatz zugeordnet wird, indem die Client-ID an den Steckplatz der austauschbaren Feldeinheit anstatt an die austauschbare Feldeinheit gebunden wird, die in den Steckplatz für die austauschbare Feldeinheit eingesetzt wird.

2. Computersystem nach Anspruch 1, wobei der Steckplatz für die austauschbare Feldeinheit einen kompakten Verbindungssteckplatz für periphere Komponenten, d. h. einen CPCI-Slot, aufweist.

3. Computersystem nach einem der vorstehenden Ansprüche, wobei die Client-ID mindestens eines der Folgenden aufweist, nämlich eine Seriennummer, eine Teilnummer oder eine geographische Adresse des Steckplatzes für die austauschbare Feldeinheit.

4. Computersystem nach einem der vorstehenden Ansprüche, wobei die Client-ID eine eindeutige Kennung (Identifier) aufweist und wobei die eindeutige Kennung verhindert, daß eine austauschbare Feldeinheit mit anderen Netzwerkeinrichtungen kollidiert.

5. Computersystem nach einem der vorstehenden Ansprüche, wobei die Client-ID eine Client-ID aufweist, die von einem Adreßprotokoll für das Zuordnen dynamischer Internetprotokolladressen, d. h. IP-Adressen, verwendet wird.

6. Computersystem nach Anspruch 5, wobei das Adreßbuchprotokoll ein dynamisches Wirt-Konfigurierungsprotokoll (Dynamic Host Configuration Protocol), DHCP, aufweist.

7. Computersystem nach einem der vorstehenden Ansprüche, welches weiterhin eine austauschbare Feldeinheit aufweist, die durch den Steckplatz für die austauschbare Feldeinheit gehalten wird.

8. Computersystem nach Anspruch 7, wobei die Client-ID in dem nicht flüchtigen Speicher gespeichert wird.

9. Computersystem nach Anspruch 8, wobei die Client-ID durch die austauschbare Feldeinheit heruntergeladen werden kann.

10. Computersystem nach Anspruch 9, wobei die austauschbare Feldeinheit ein Protokoll für eine intelligente Plattformverwaltungsschnittstelle, IPMI (Intelligent Platform Management Interface), aufweist, um die Client-ID aus dem nicht flüchtigen Speicher herunterzuladen.

11. Computersystem nach Anspruch 9 oder 10, wobei die austauschbare Feldeinheit die Client-ID für das Booten des dynamischen Wirt-Konfigurierungsprotokolls, DHCP (Dynamic Host Configuration Protocol), verwendet.

12. Computersystem nach einem der Ansprüche 8 bis 11, wobei die zentrale Resource die Client-ID heranholt und für eine neue austauschbare Feldeinheit verfügbar macht und wobei die neue austauschbare Feldeinheit die Client-ID herunterlädt, wenn die neue austauschbare Feldeinheit durch den Steckplatz für die austauschbare Feldeinheit gehalten wird.

13. Computersystem nach einem der vorstehenden Ansprüche, welches weiterhin einen zweiten Steckplatz für eine austauschbare Feldeinheit aufweist, der an einer Hauptplatine angeordnet ist und wobei die zentrale Resource eine zweite Client-ID erzeugt.

14. Computersystem nach Anspruch 13, wobei die Client-ID durch die zentrale Resource für den Steckplatz der austauschbaren Feldeinheit eindeutig erzeugt wird und wobei die zweite Client-ID durch die zentrale Resource für den zweiten Steckplatz einer austauschbaren Feldeinheit in eindeutiger Weise erzeugt wird.

15. Computersystem nach einem der vorstehenden Ansprüche, welches eine Schaltkreisplatine aufweist, die eine Hauptplatine und einen Bus (740) bildet, wobei der Steckplatz für die austauschbare Feldeinheit auf der Hauptplatine sitzt und die zentrale Resource mit dem Steckplatz für die austauschbare Feldeinheit über den Bus verbunden ist.

16. Verfahren zur Erzeugung einer Client-ID auf einem Computersystem (710), welches aufweist:
Erzeugen einer Client-ID über eine zentrale Resource (730),
Zuordnen der Client-ID zu einem Steckplatz (725) für eine austauschbare Feldeinheit (720),
Speichern der zugeordneten Clint-ID in einem nicht flüchtigen Speicher (735),
Bereitstellen der gespeicherten Client-ID für eine austauschbare Feldeinheit über eine Schnittstelle, und
Verwenden der Client-ID durch die austauschbare Feldeinheit,
wobei das Zuordnen der Client-ID zu dem Steckplatz das Binden der Client-ID an den Steckplatz anstatt an eine austauschbare Feldeinheit, die in den Steckplatz eingesetzt wird, aufweist.

17. Verfahren nach Anspruch 16, wobei die austauschbare Feldeinheit in den mit der Client-ID versehenen Steckplatz für eine austauschbare Feldeinheit eingesteckt wird.

18. Verfahren nach Anspruch 16 oder 17, wobei das Verwenden der Client-ID durch die austauschbare Feldeinheit das Verwenden der Client-ID als ein Client-ID-Feld für das Booten des dynamischen Wirt-Konfigurierungsprotokolls, DHCP (Dynamic Host Configuration Protocol), aufweist.

19. Verfahren nach einem der Ansprüche 16 bis 18, welches weiterhin aufweist:
Bestimmen, ob die austauschbare Feldeinheit durch eine neue austauschbare Feldeinheit ersetzt werden soll,
Heranholen und Verfügbarmachen der Client-ID für die neue austauschbare Feldeinheit, und
Herunterladen der Client-ID durch die neue austauschbare Feldeinheit.

## Revendications

1. Système informatique (710), comprenant :
un emplacement (725) pour une unité remplaçable sur site (720) ;
une ressource centrale (730) reliée audit emplacement pour unité remplaçable sur site ; et
une mémoire non volatile (735) reliée à ladite ressource centrale ;
dans lequel ladite ressource centrale peut être mise en fonctionnement pour générer un identificateur client (ID-client) et pour associer ledit ID-client audit emplacement pour unité remplaçable sur site, dans lequel ledit ID-client est associé audit emplacement par rattachement dudit ID-client audit emplacement pour unité remplaçable sur site plutôt qu'à une unité remplaçable sur site devant être insérée dans ledit emplacement pour unité remplaçable sur site.

2. Système informatique selon la revendication 1, dans lequel ledit emplacement pour unité remplaçable sur site comprend un emplacement CPCI (pour Compact Peripheral Component Interconnect = Interconnexion pour Composant Périphérique Compact).

3. Système informatique selon l'une quelconque des revendications précédentes, dans lequel ledit ID-client comprend l'un d'un numéro de série, d'un numéro de pièce et d'une adresse géographique dudit emplacement pour unité remplaçable sur site.

4. Système informatique selon l'une quelconque des revendications précédentes, dans lequel ledit ID-client comprend un identificateur unique et dans lequel ledit identificateur unique empêche l'unité remplaçable sur site d'entrer en conflit avec d'autres dispositifs du réseau.

5. Système informatique selon l'une quelconque des revendications précédentes, dans lequel ledit ID-client comprend un ID-client utilisé par un protocole d'adressage permettant d'affecter des adresses IP dynamiques (Internet Protocol = Protocole Internet).

6. Système informatique selon la revendication 5, dans lequel ledit protocole d'adressage comprend un protocole DHCP (Dynamic Host Configuration Protocol pour Protocole de Configuration d'Hôte Dynamique).

7. Système informatique selon l'une quelconque des revendications précédentes, comprenant en outre une unité remplaçable sur site maintenue par ledit emplacement pour unité remplaçable sur site.

8. Système informatique selon la revendication 7, dans lequel ledit ID-client est stocké dans ladite mémoire non volatile.

9. Système informatique selon la revendication 8, dans lequel ledit ID-client peut être téléchargé par ladite unité remplaçable sur site.

10. Système informatique selon la revendication 9, dans lequel ladite unité remplaçable sur site utilise une interface IPMI (pour Intelligent Platform Management Interface = Interface de Gestion de Plate-forme Intelligente) pour télécharger ledit ID-client depuis ladite mémoire non volatile.

11. Système informatique selon la revendication 9 ou 10, dans lequel ladite unité remplaçable sur site utilise ledit ID-client pour démarrer en utilisant le protocole DHCP (pour Dynamic Host Configuration Protocol).

12. Système informatique selon l'une quelconque des revendications 8 à 11, dans lequel ladite ressource centrale extrait et rend disponible ledit ID-client à une nouvelle unité remplaçable sur site et dans lequel ladite nouvelle unité remplaçable sur site télécharge ledit ID-client lorsque ladite nouvelle unité remplaçable sur site est maintenue par ledit emplacement pour unité remplaçable sur site.

13. Système informatique selon l'une quelconque des revendications précédentes, comprenant en outre un second emplacement pour unité remplaçable sur site situé sur un fond de panier et dans lequel ladite ressource centrale génère un second ID-client.

14. Système informatique selon la revendication 13, dans lequel ledit ID-client est généré de façon unique par ladite ressource centrale pour ledit emplacement pour unité remplaçable sur site et ledit second ID client est généré de façon unique par ladite ressource centrale pour ledit second emplacement pour unité remplaçable sur site.

15. Système informatique selon l'une quelconque des revendications précédentes, comprenant une carte de circuit formant un fond de panier et un bus (740), ledit emplacement pour unité remplaçable sur site étant placé sur ledit fond de panier et ladite ressource centrale étant reliée audit emplacement pour unité remplaçable sur site par l'intermédiaire dudit bus.

16. Procédé pour générer un ID-client sur un système informatique (710), consistant à :
générer un ID-client au moyen d'une ressource centrale (730) ;
associer ledit ID-client à un emplacement (725) pour une unité remplaçable sur site (720) ;
stocker ledit ID-client associé dans une mémoire non volatile (735) ;
fournir ledit ID-client stocké à une unité remplaçable sur site par l'intermédiaire d'une interface ; et
faire en sorte que ladite unité remplaçable sur site utilise ledit ID-client ;
dans lequel le fait d'associer ledit ID-client audit emplacement comprend le fait de rattacher ledit emplacement audit ID-client plutôt qu'à une unité remplaçable sur site devant être insérée dans ledit emplacement.

17. Procédé selon la revendication 16, dans lequel ladite unité remplaçable sur site est insérée dans ledit emplacement pour unité remplaçable sur site associé audit ID-client.

18. Procédé selon la revendication 16 ou 17, dans lequel ladite utilisation dudit ID-client par ladite unité remplaçable sur site comprend l'utilisation dudit ID-client en tant que champ d'ID-client pour un démarrage utilisant le protocole DHCP (Dynamic Host Configuration Protocol).

19. Procédé selon l'une quelconque des revendications 16 à 18, consistant en outre à :
déterminer si ladite unité remplaçable sur site doit être remplacée par une nouvelle unité remplaçable sur site ;
extraire et rendre disponible ledit ID-client pour ladite nouvelle unité remplaçable sur site ; et
faire en sorte que ledit ID-client soit téléchargé par ladite nouvelle unité remplaçable sur site.
